Europäisches Patentamt

European Patent Office

Office européen des brevets

(19)

(11) Numéro de publication : **0 030 494**
**B1**

(12) **FASCICULE DE BREVET EUROPÉEN**

(45) Date de publication du fascicule du brevet :
**11.05.83**

(51) Int. Cl.³ : **F 16 C   1/22**, F 16 D 23/12,
F 16 D 13/75, B 60 K 23/02

(21) Numéro de dépôt : **80401701.0**

(22) Date de dépôt : **28.11.80**

(54) Commande mécanique par câble coulissant axialement dans une gaine flexible.

(30) Priorité : **07.12.79 FR 7930097**

(43) Date de publication de la demande :
**17.06.81 Bulletin 81/24**

(45) Mention de la délivrance du brevet :
**11.05.83 Bulletin 83/19**

(84) Etats contractants désignés :
**DE GB IT**

(56) Documents cités :
**FR A 2 111 125**
**FR A 2 276 982**
**FR A 2 375 489**

(73) Titulaire : **SOCIETE ANONYME D.B.A.**
**Centre Paris Pleyel**
**F-93521 St Denis Cedex 01 (FR)**

(72) Inventeur : **Deligny, Jean**
**16, rue d'Alicante**
**F-72000 Le Mans (FR)** ·

(74) Mandataire : **Poldatz, Emmanuel et al**
**Service Brevets Bendix 44 rue François 1er**
**F-75008 Paris (FR)**

Jouve, 18, rue St-Denis, 75001 Paris, France

Commande mécanique par câble coulissant axialement dans une gaine flexible

La présente invention a pour objet une commande mécanique par câble coulissant axialement dans une gaine flexible.

L'invention concerne les commandes mécaniques du type comprenant une chaîne de transmission de commande incluant un câble, un organe d'actionnement tel que par exemple une pédale reliée à une extrémité dudit câble, et éventuellement un système de leviers interposé entre l'autre extrémité du câble et un organe récepteur tel que par exemple un embrayage à friction pour véhicule automobile.

On connaît de telles commandes mécaniques dans lesquelles les deux extrémités de la gaine flexible extérieure prennent appui sur deux embouts de gaine fixés sur un bâti. Lorsqu'un tel type de commande est utilisé pour commander un embrayage pour véhicule automobile, par exemple du type monodisque à sec, l'usure des garnitures de friction, résultant des engagements et désengagements successifs de l'embrayage, provoque l'apparition de jeux croissants entre les divers éléments de l'embrayage. Si aucun dispositif de rattrapage des jeux n'est prévu, la position de repos de la pédale d'actionnement de l'embrayage varie graduellement jusqu'à atteindre une position finale, correspondant à l'usure maximum des garnitures de friction, dans laquelle la pédale est remontée de plusieurs centimètres par rapport à sa position initiale de repos (garnitures de friction neuves). On constate également après l'installation d'une telle commande sur un véhicule et après un court temps d'utilisation que le câble tend à s'allonger sous l'effet des efforts de traction qui lui sont appliqués, la gaine tendant elle à se raccourcir sous l'effet des efforts de compression qui lui sont appliqués en réaction. Ce rallongement du câble et le raccourcissement de la gaine s'ajoutent et provoquent également l'apparition de jeux parasites dans la chaîne de transmission de commande, qui sont nuisibles à un fonctionnement correct de la commande.

La demande de brevet d'invention FR 2 375 489 (BORG-WARNER CORP.) montre et décrit un mécanisme de réglage automatique de la tringlerie d'un embrayage comportant un dispositif de liaison débrayable à coincement par billes qui est susceptible de libérer une pièce cylindrique montée à l'extrémité d'un câble de commande, afin de permettre le déplacement libre de cette extrémité par rapport à l'organe d'actionnement lorsque les divers composants de la commande sont au repos. Le système proposé effectue le rattrapage automatique de jeux pouvant apparaître dans la commande par câble, mais il ne présente pas des conditions suffisantes de sécurité pour un emploi sur un véhicule automobile ; on constate en effet qu'en cas de non-fonctionnement du dispositif de liaison débrayable à coincement par billes, il est impossible d'actionner la commande d'embrayage au moyen de la pédale.

La demande de brevet français 2 278 982 décrit par ailleurs un dispositif de rattrapage du jeu résultant d'un allongement du câble dans une commande par câble de frein ou de dérailleur de bicyclette, dans lequel la portion extrême de la gaine au voisinage de l'organe ou manette d'actionnement est montée avec possibilité de débattement axial dans un support fixe, un dispositif de blocage momentané constitué par un système de liaison débrayable étant disposé entre le support fixe et la portion extrême de la gaine pour permettre un positionnement libre de cette dernière par rapport au support fixe lorsque ledit système est débrayé, le dispositif de blocage momentané comportant un organe de commande couplé à un point de la chaîne de transmission de commande par câble. Dans ce document toutefois, la portion extrême de la gaine est montée à coulissement dans une partie d'un des flasques de montage à pivotement de l'organe d'actionnement, le dispositif de blocage étant constitué par un levier basculant formant mâchoire monté sur ledit flasque, l'organe de commande du levier basculant étant constitué par l'organe d'actionnement lui-même. Cet agencement est donc encombrant et délicat, et ne peut être installé qu'au voisinage immédiat de l'organe d'actionnement, ce qui n'est pas compatible avec la plupart des chaînes de transmission de commande par câble, notamment dans le domaine de l'automobile.

La présente invention a pour objet une commande mécanique par câble du type de celle décrit en dernier ci-dessus, de conception simple et ramassée, et susceptible d'effectuer un rattrapage automatique de tous les jeux pouvant apparaître lors de l'utilisation de cette commande sans interrompre la chaîne de transmission par câble et en exploitant le seul déplacement du câble pour commander le dispositif de blocage momentané de la gaine par rapport au support fixe qui peut être distant de l'organe d'actionnement.

Pour ce faire, la présente invention propose une commande mécanique par câble coulissant axialement dans une gaine flexible, du type comprenant une chaîne de transmission de commande incluant ledit câble, un organe d'actionnement, tel que par exemple une pédale, relié à une extrémité du câble, et éventuellement un système de leviers interposé entre l'autre extrémité du câble et un câble et un organe récepteur de l'actionnement, tel que par exemple un embrayage à friction, la gaine étant ancrée au voisinage de son extrémité voisine de l'organe récepteur à une partie fixe d'un bâti, la portion extrême de la gaine au voisinage de son autre extrémité étant montée avec possibilité de débattement axial dans un support fixe solidaire du bâti, un dispositif de blocage momentané constitué par un système de liaison débrayable étant disposé entre le support fixe et la portion extrême de la gaine pour permettre un positionnement libre de cette dernière par rapport au support fixe lorsque ledit système est débrayé, le dispositif de blocage momentané comportant un organe de commande couplé à un point de ladite chaîne de transmission de commande, caractérisé en ce que le dispositif de blocage momentané est du type à coincement par bille et comprend un manchon cylindrique formant cage à bille coulissant axialement sur ladite portion extrême de la gaine, laquelle forme une portée cylindrique définissant, avec une portée cônique formée sur le support fixe, un logement pour au moins une bille de la cage à bille, un moyen élastique sollicitant normalement le manchon dans une direction pour engager la bille à coincement entre lesdites portées cylindrique et conique, et un élément formant butée fixé de manière réglable sur le câble et agissant sur le manchon à l'encontre du moyen élastique lorsque la commande mécanique est dans sa position de repos afin de dégager la bille et permettre le positionnement libre de la portion extrême de la gaine par rapport au support fixe.

L'invention sera maintenant décrite en se référant aux dessins annexés dans lesquels :

la figure 1  illustre une commande mécanique par câble flexible connue de l'art antérieur ;

la figure 2  illustre une commande mécanique selon l'invention ;

la figure 3  représente la commande mécanique illustrée à la figure 2 dans sa position actionnée ;

la figure 4  représente la commande mécanique illustrée à la figure 2 dans sa position de repos après rattrapage automatique de jeux ; et

la figure 5  représente la commande illustrée à la figure 2 lors de son installation et de son réglage.

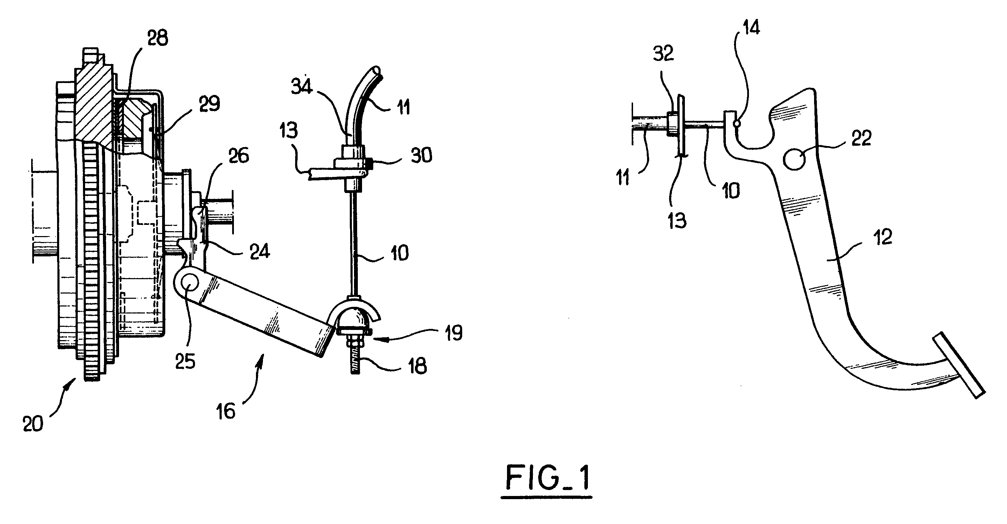

On a représenté à la figure 1 une commande mécanique par câble coulissant axialement dans une gaine flexible du type « BOWDEN », comprenant une chaîne de transmission de commande incluant un câble flexible 10, un organe d'actionnement constitué ici par une pédale 12 reliée à une extrémité 14 du câble 10, et un système de leviers 16 interposé entre la seconde extrémité 18 du câble 10 et un organe récepteur 20 constitué dans l'exemple représenté par un embrayage à friction du type monodisque pour véhicule automobile. La pédale d'actionnement 12 est montée pivotante sur un bâti 13 au moyen d'un axe 22. La seconde extrémité 18 du câble 10 est reliée à un système de leviers 16 qui comporte une fourchette de commande 24 de l'embrayage à friction 20. La fourchette 24 est montée pivotante sur le bâti au moyen d'un axe 25. L'extrémité 26 de la fourchette 24 est susceptible, lorsqu'un opérateur actionne la pédale 12 d'agir sur un disque d'embrayage 28 afin de déplacer ce dernier à l'encontre de l'effort exercé par des ressorts de rappel 29 pour provoquer le débrayage de l'embrayage 20. Dans cette commande, les deux extrémités de la gaine 11 prennent appui sur des embouts de gaine 30 et 32 fixés au bâti 13.

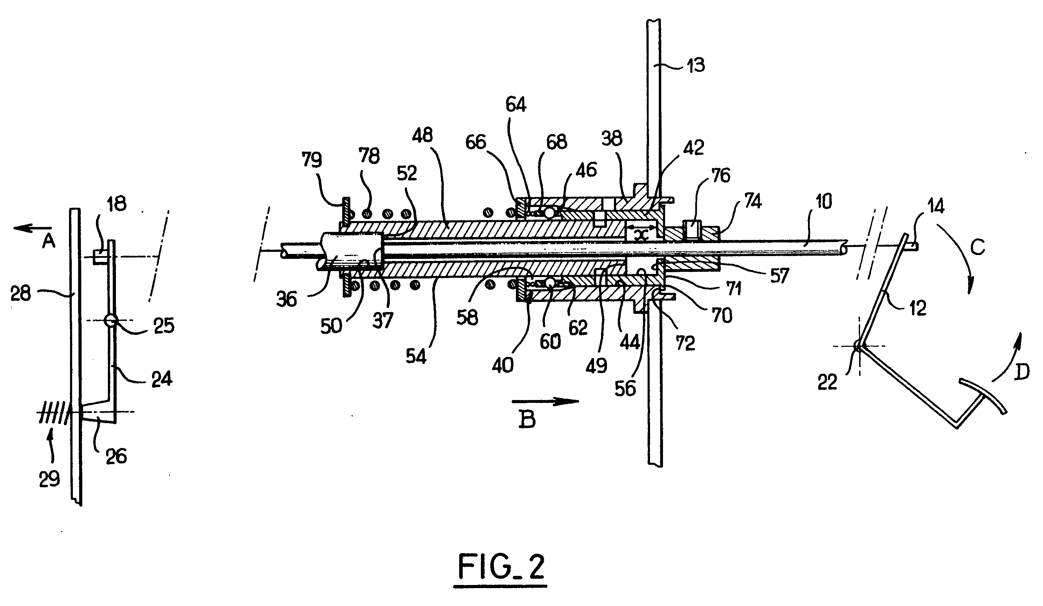

On a représenté à la figure 2 et d'une manière schématique, une commande mécanique par câble coulissant selon l'invention. Comme dans la commande illustrée à la figure 1, l'extrémité 34 de la gaine 11 est ancrée au bâti d'une façon en soi connue au moyen de l'embout de gaine 30. Conformément à l'invention, la portion extrême 36 de la gaine au voisinage de son autre extrémité 37 est montée avec possibilité de débattement axial dans un support fixe 38 solidaire dudit bâti d'une façon qui sera maintenant décrite. On a désigné sous la référence générale 40 un dispositif de blocage momentané de la portion extrême 36 de la gaine par rapport audit support fixe 38. Le dispositif 40 est constitué par un système de liaison débrayable à coincement par billes. Ce système comprend un manchon 42 monté coulissant dans un alésage 44 dudit support fixe. Une portée d'appui tronconique 46 est formée dans l'alésage 44 du support fixe 38. La portion extrême 36 de la gaine 11 est munie d'un prolongement tubulaire rigide 48 fixé à la portion extrême de la gaine 36. Comme on peut le voir sur la figure 2, la portion extrême 36 est emboîtée dans un alésage 50 formé dans le prolongement tubulaire 48, l'extrémité 37 de la gaine 11 prenant appui sur le fond 52 de l'alésage 50. La surface externe 54 du prolongement tubulaire 48 définit une portée d'appui cylindrique susceptible de coulisser dans un alésage intérieur 56 formée dans le manchon 42. Les surfaces de portée tronconique 46 et cylindrique 54 définissent entre elles un logement 58 dans lequel sont reçues des billes 60. Les billes 60 sont réparties circulairement et disposées dans des alésages radiaux 62 formés dans le manchon 42. Les billes 60 sont montées tournantes dans les alésages 62. Un ressort cylindrique 64 prenant appui sur une surface de butée constituée par un épaulement radial interne 66 formé à l'extrémité gauche du support fixe 38, sollicite l'extrémité 68 du manchon 42 dans la direction indiquée par la flèche B.

La commande mécanique est représentée à la figure 2 dans sa position de repos. Le manchon 42 est muni d'un épaulement radial 70 qui dans la position de repos est maintenu en appui sur un épaulement 72 formé sur le support fixe 38 sous l'action d'un organe de commande 74 associé au câble 10. L'organe de commande est constitué par une butée 74 fixée au câble 10 de manière réglable au moyen de la vis de pression 76. Comme on peut le constater à la figure 2, la butée 74 maintient l'épaulement 70 du manchon 42 en appui sur l'épaulement 72 du support fixe 38 de façon à éloigner les billes 60 de la surface de portée tronconique 46 en agissant à l'encontre de la sollicitation exercée par le ressort 64 sur le manchon 42. On comprend que dans cette position le système de liaison débrayable à coincement par billes 40 est débrayé permettant ainsi un débattement axial du prolongement tubulaire 48 de la gaine 11 par rapport au support fixe 38.

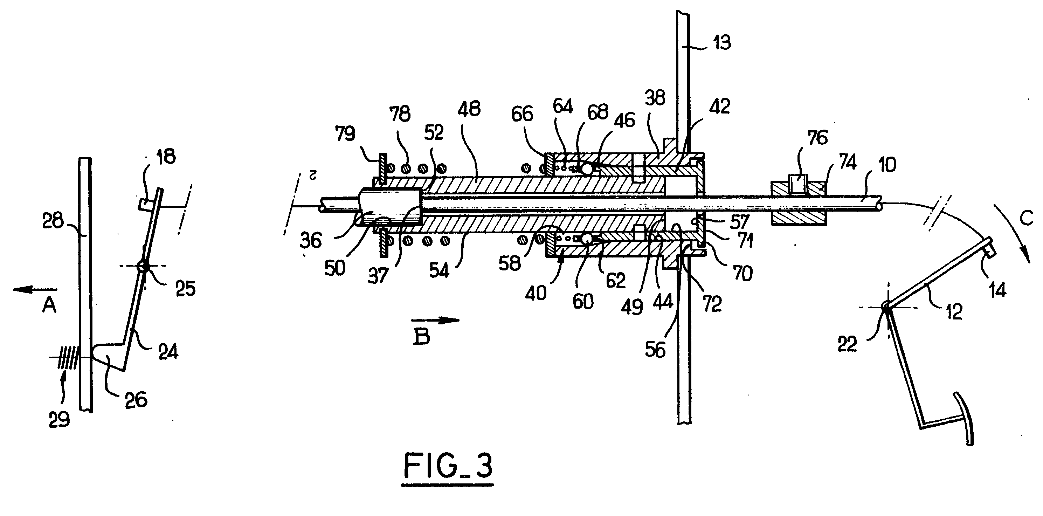

On a représenté à la figure 3 la commande, illustrée à la figure 2, dans sa position actionnée. Lorsque l'opérateur exerce un effort sur la pédale 12 il provoque un pivotement de cette dernière autour de son axe 22. Ce pivotement entraîne un déplacement de l'extrémité 14 du câble dans la direction indiquée par la flèche C. Ce déplacement du câble provoque le déplacement de la butée 74 en éloignement du manchon 42. Sous l'effet du ressort cylindrique 64, le manchon 42 se déplace dans la direction indiquée par la flèche B jusqu'à ce que les billes 60 viennent en application contre la portée tronconique 46. On comprend que dans cette position tout déplacement du prolongement tubulaire 48 dans la direction de la flèche B est empêché par le coincement des billes 60 entre les surfaces de portée 46 et 54. L'effort de traction exercé sur le câble 10 se transmet donc directement à la fourchette d'embrayage 24 qui provoque un déplacement du disque d'embrayage 28 dans la direction indiquée par la flèche A à l'encontre de la sollicitation exercée par les ressorts de rappel 29. Lorsque l'opérateur relâche l'effort appliqué à la pédale 12 l'ensemble des composants de la commande reprennent leur position de repos illustrée à la figure 2.

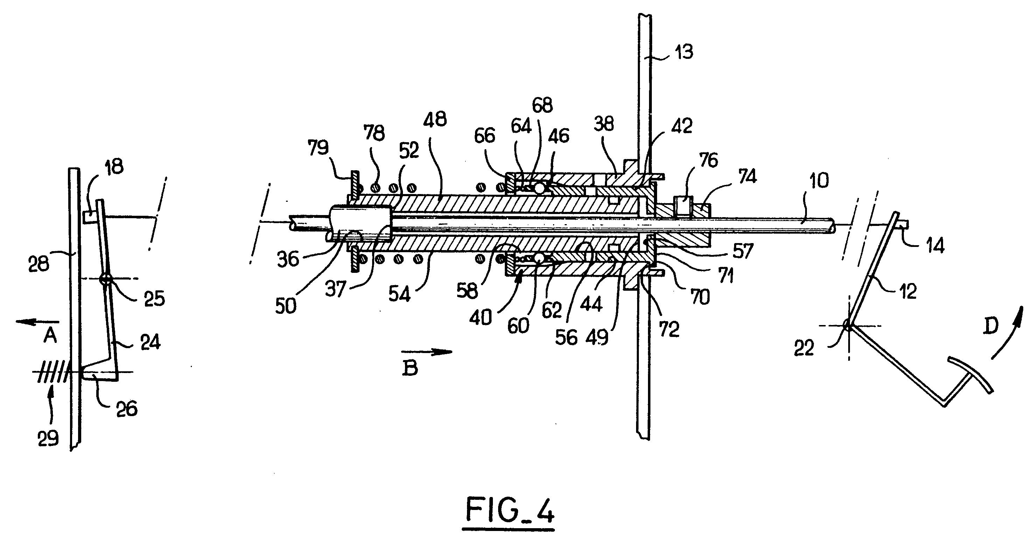

On a représenté à la figure 4 la commande mécanique dans sa position de repos et après de nombreux engagements et désengagements de l'embrayage 20 ayant provoqué une usure importante des garnitures de friction du disque d'embrayage 28. Comme on peut le constater à la figure 4 la diminution de l'épaisseur des garnitures du disque 28 a provoqué une modification de la position de repos du disque 28 et par là même de la position de repos de la fourchette d'embrayage 24. L'extrémité 26 de la fourchette 24 s'est déplacée dans la direction de la flèche B provoquant par là même un déplacement équivalent de l'extrémité 18 du câble 10 dans la direction de la flèche A. En l'absence d'un dispositif autorisant un débattement axial du prolongement 48 par rapport au support fixe 38 tel que le système de verrouillage par coincement 40, le déplacement supplémentaire de l'extrémité du câble 18 se répercuterait sur l'extrémité du câble 10 et par là même provoquerait une modification de la position de repos de la pédale 12, cette dernière remontant dans la direction indiquée par la flèche D. Grâce au système 40, et dès que la butée 74 entre en contact avec le manchon 42 et amène l'épaulement 70 de ce dernier en butée sur l'épaulement 72 du support fixe 38, le débrayage du système permet à la portion tubulaire 48 prolongeant l'extrémité 36 de la gaine 11 de se positionner librement par rapport au support fixe 38 en se déplaçant dans la direction indiquée par la flèche B d'une quantité égale au déplacement supplémentaire de l'extrémité 18 du câble 10. Ce déplacement n'est rendu possible que grâce à la flexibilité de la gaine 11 et grâce à la longueur de cette dernière qui est supérieure à la distance séparant la butée fixe 30 du support fixe 38. On comprend qu'ainsi les jeux pouvant apparaître dans la commande mécanique par câble sont automatiquement rattrapés et qu'ainsi la pédale d'actionnement 12 occupe une position de repos qui reste identique quelle que soit l'usure des garnitures de friction du disque d'embrayage 28 et ce jusqu'à l'usure maximum admissible des garnitures de friction.

Conformément à l'invention, le système de liaison débrayable à coincement par billes 40 (qui permet un blocage momentané du débattement axial de la portion extrême 36 de la gaine 11 par rapport au support fixe 38) permet également d'effectuer le rattrapage automatique des jeux pouvant apparaître dans la commande mécanique lorsque le câble 10 se détend où lorsque la gaine 11 se raccourcit sous l'effet des efforts de compression qui lui sont appliqués. En effet dans la plupart des cas, la gaine 11 est constituée par un fil métallique enroulé en hélice dont les spires peuvent se tasser sous l'effort.

Dans le cas d'un allongement du câble 10 ou d'un raccourcissement de la gaine 11, le prolongement tubulaire 48 de la gaine 11 se positionne librement par rapport au support fixe 38 en se déplaçant axialement dans la direction indiquée par la flèche A. Ce déplacement s'effectue sous l'action d'un ressort cylindrique coaxial 78 qui prend appui sur l'épaulement 66 du support fixe 38 et qui sollicite le prolongement tubulaire 48 de la gaine 36 au moyen d'un circlips 79 qui lui est fixé.

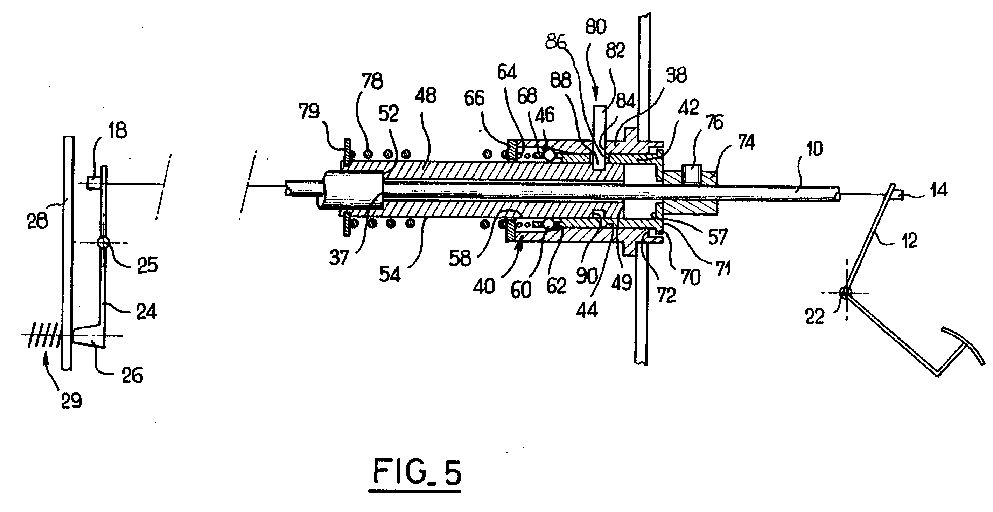

On a représenté à la figure 5 la commande mécanique illustrée à la figure 2 lors de son installation et de son réglage. Afin de permettre le réglage initial de la commande, on a prévu sur cette dernière des moyens amovibles 80. Ces moyens sont constitués par une goupille 82 enfilée dans un alésage radial 84 formé dans le support fixe 38. La goupille 82 est également enfilée dans un alésage radial 84 formé dans le support fixe 38. La goupille 82 est également enfilée dans un alésage radial 86 formé dans le manchon coulissant 42. L'extrémité 88 de la goupille 82 débouche de l'alésage 86 dans une gorge circulaire 90 formée dans le prolongement tubulaire 48 de la portion extrême 36 de la gaine 11.

Dans la position illustrée à la figure 5, le prolongement tubulaire 48 et le manchon 42 sont immobilisés axialement par rapport au support fixe 38 au moyen de la goupille 82. Comme on peut le remarquer, le diamètre de l'alésage 86 est supérieur au diamètre de la goupille 82 afin de permettre la mise en appui de certaines des billes 60 sur la portée d'appui 46 sous l'effort appliqué par le ressort 64 au manchon 42.

Le réglage initial de la commande s'effectue de la manière suivante : après avoir installé la commande sur le bâti et avoir relié les extrémités 14 et 18 du câble 10 à la pédale 12 et aux leviers 16, on effectue le réglage de la tension initiale du câble par exemple au moyen d'un système vis-écrou tel que le système 19 représenté à la figure 1, en soi connu, disposé à l'une de ses extrémités du câble 10. On amène ensuite la butée réglable 74 en contact avec la paroi d'extrémité 71 du manchon 42 en prenant soin de n'appliquer aucun effort sur le manchon 42 à l'encontre de celui exercé par le ressort 64. Dans cette position, on fixe la butée réglable 74 au câble 10 au moyen de la vis de pression 76. Il ne reste plus alors qu'à ôter la goupille 80. Le prolongement 48 occupe alors une position de repos initial dans laquelle son extrémité 49 est éloignée d'une distance « x » (voir Figure 2) au fond 57 de l'alésage 56 formé dans le manchon 42. La distance « x » est légèrement supérieure à l'usure maximale des garnitures de friction de l'embrayage 20.

Il est à noter que grâce au dispositif 40 le préréglage de la tension initiale du ressort au moyen d'un système du type 19 n'est pas obligatoire, le réglage initial s'effectuant alors automatiquement grâce au ressort 78 comme il a été décrit plus haut.

**Revendications**

1. Commande mécanique par câble (10) coulissant axialement dans une gaine flexible (11), du type comprenant une chaîne de transmission de commande incluant ledit câble (10), un organe d'actionnement tel que par exemple une pédale (12), relié à une extrémité (14) du câble, et éventuellement un système de leviers (16) interposé entre l'autre extrémité (16) du câble et un organe récepteur de l'actionnement (28), tel que par exemple un embrayage à friction, la gaine (11) étant ancrée au voisinage de son extrémité (34) voisine de l'organe récepteur à une partie fixe d'un bâti (13), la portion extrême (36, 48) de gaine au voisinage de son autre extrémité (37) étant montée avec possibilité de débattement axial dans un support fixe (38) solidaire du bâti, un dispositif de blocage momentané constitué par un système de liaison débrayable étant disposé entre le support fixe (38) et la portion extrême (36, 48) de la gaine pour permettre un positionnement libre de cette dernière par rapport au support fixe (38) lorsque ledit système (40) est débrayé, le dispositif de blocage momentané (40) comportant un organe de commande (74, 42) couplé à un point de ladite chaîne de transmission de commande, caractérisé en ce que le dispositif de blocage momentané (40) est du type à coincement par bille (60) et comprend un manchon cylindrique (42) formant cage à bille coulissant axialement sur ladite portion extrême (36, 48) de la gaine, laquelle forme une portée cylindrique (54) définissant, avec une portée conique (46) formée sur le support fixe, un logement pour au moins une bille (60) de la cage à bille, un moyen élastique (64) sollicitant normalement le manchon (42) dans une direction pour engager la bille en coincement entre lesdites portées cylindrique (54) et conique (46), et un élément formant butée (74) fixé de manière réglage (76) sur le câble (10) et agissant sur le manchon (42) à l'encontre du moyen élastique (64) lorsque la commande mécanique est dans sa position de repos afin de dégager la bille (60) et permettre le positionnement libre de la portion extrême (36, 48) de la gaine par rapport au support fixe.

2. Commande mécanique selon la revendication 1, caractérisée en ce que le manchon (42) comporte une saillie (70) venant coopérer en butée avec le support fixe (13, 38) pour limiter sa course à l'encontre de l'organe élastique (64) sous l'effet de l'action de l'élément formant butée (74).

3. Commande mécanique selon la revendication 1 ou la revendication 2, caractérisée en ce que l'organe élastique (64) est constitué par un ressort cylindrique coaxial à la portion extrême (36, 48) de la gaine et prenant appui sur un épaulement (66) formé sur le support fixe (38).

4. Commande mécanique selon l'une des revendications 1 à 3, caractérisée en ce que ladite portion extrême de la gaine comprend un prolongement tubulaire rigide (48) fixé à l'extrémité (36) de la gaine.

5. Commande mécanique selon la revendication 4, caractérisée en ce qu'elle comporte un moyen élastique supplémentaire (78) disposé entre le support fixe (38) et le prolongement tubulaire (48) de la gaine de façon à comprimer axialement et en permanence ladite gaine (12) en appui sur ledit ancrage de son extrémité (34).

6. Commande mécanique selon l'une quelconque des revendications précédentes, caractérisée en ce qu'elle comporte des moyens amovibles (80) permettant le réglage initial des positions relatives des composants (38, 42, 48) de ladite commande lorsque cette dernière est dans sa position de repos.

7. Commande mécanique selon la revendication 6, caractérisée en ce que les moyens amovibles sont constitués par un élément amovible (82) susceptible d'immobiliser axialement la portion extrême (48) de la gaine (11) et le manchon (42) par rapport au support fixe (38).

**Claims**

1. A mechanical control by a cable (10) axially sliding in a flexible sheath (11), of the type comprising a control transmission chain including said cable (10), an actuating member like for example a pedal (12) connected to one extremity (14) of the cable, and, if desired, a lever system (16) interposed between the other extremity (16) of the cable and a receiving actuating member (28) like for example a friction clutch, the sheath (11) being anchored in proximity to its extremity (34) adjacent to the receiving member at a fixed portion of a frame (13), the end portion (36, 48) of the sheath adjacent to its other extremity (37) being mounted for axial displacement in a fixed support (38) integral with the frame, a momentary blocking device constituted by a disengageable connection system being disposed between the fixed support (38) and the end portion (36, 48) of the sheath for permitting a free positioning of the latter with respect to the fixed support (38) while said system (40) is disengaged, the momentary blocking device (40) comprising a control member (74, 42) coupled to a point of said controlled transmission chain, characterized in that the momentary blocking device (40) is of the ball (60) clamping type and comprises a cylindrical sleeve (42) forming a ball cage axially sliding upon said end portion (36, 48) of the sheath which forms a cylindrical bearing surface (54) defining with a conical bearing surface (46) formed upon the fixed support a housing for at least one ball (60) of the ball cage, an elastic means (64) normally biasing the sleeve (42) in a direction for clamping engagement of the ball between said cylindrical (54) and conical (46) bearing surfaces, and an element forming an abutment (74) fixed in an adjustable manner (76) upon the cable (10) and acting upon the sleeve (42) opposite to the elastic means (64) while the mechanical control is in its rest position in order to disengage the ball (60) and to permit the free positioning of the end portion (36, 48) of the sheath with respect to the fixed support.

2. A mechanical control according to claim 1, characterized in that the sleeve (42) comprises a projection (70) cooperating in abutment with the fixed support (13, 38) for limiting its movement opposite to the elastic means (64) under the effect of the action of the element forming an abutment (74).

3. A mechanical control according to claim 1 or to claim 2, characterized in that the elastic means (64) is constituted by a cylindrical spring coaxial to the end portion (36, 48) of the sheath and abutting in bearing engagement against a shoulder (66) formed on the fixed support (38).

4. A mechanical control according to any of claims 1 to 3, characterized in that said end portion of the sheath comprises a rigid tubular extension (48) fixed at the extremity (36) of the sheath.

5. A mechanical control according to claim 4, characterized in that it comprises a supplementary elastic means (78) disposed between the fixed support (38) and the tubular extension (48) of the sheath such as to axially and permanently bias said sheath (12) in abutment with said anchorage of its extremity (34).

6. A mechanical control according to any of the preceeding claims, characterized in that it comprises removable means (80) allowing the initial adjustment of the relative positions of the components (38, 42, 48) of said control while the latter is in its rest position.

7. A mechanical control according to claim 6, characterized in that the removable means are constituted by a removable element (82) adapted to axially immobilize the end portion (48) of the sheath (11) and the sleeve (42) with respect to the fixed support (38).

**Ansprüche**

1. Mechanische Steuerung durch ein in einem flexiblen Mantel (11) axial verschiebbares Kabel (10) in Form einer das Kabel (10) umfassenden Steuerungsübertragungskette, mit einem Betätigungsorgan wie z. B. einem Pedal (12), das an einem Ende (14) des Kabels angebracht ist, und gegebenenfalls einem Hebelsystem (16), das zwischen dem anderen Ende (16) des Kabels und einem Empfangsorgan (28) wie z. B. einer Reibungskupplung angeordnet ist, wobei der Mantel (11) in Nähe seines dem Empfangsorgan benachbarten Endes (34) an einem ortsfesten Teil eines Rahmens (13) befestigt ist, wobei der seinem Ende (37) benachbarte Endabschnitt (36, 48) des Mantels mit der Möglichkeit einer Axialbewegung in einem mit dem Rahmen fest verbundenen ortsfesten Träger (38) angebracht ist, wobei eine durch ein ausrückbares Verbindungssystem gebildete Sperrvorrichtung zwischen dem ortsfesten Träger (38) und dem Endabschnitt (36, 48) des Mantels angeordnet ist, um eine freie Positionierung des letzteren bezüglich des ortsfesten Trägers (38) zu ermöglichen, wenn das besagte Verbindungssystem (40) ausgerückt ist, wobei die Sperrvorrichtung (40) ein Steuerorgan (74, 42) aufweist, das an einem Punkt der Steuerungsübertragungskette angeschlossen ist, dadurch gekennzeichnet, daß die Sperrvorrichtung (40) eine Kugelklemmvorrichtung (60) ist und eine zylindrische Hülse (42) aufweist, die einen Kugelkäfig bildet, der auf dem besagten Endabschnitt (36, 48) des Mantels axial gleitet, daß dieser eine zylindrische Anlagefläche (54) bildet, die zusammen mit einer am ortsfesten Träger gebildeten konischen Anlagefläche (46) eine Aufnahme für mindestens eine Kugel (60) des Kugelkäfigs definiert, daß ein elastisches Mittel (64) normalerweise die Hülse (42) in eine Richtung vorspannt, in der die Kugel zwischen der zylindrischen Anlagefläche (54) und der konischen Anlagefläche (46) eingeklemmt wird, und daß ein Anschlagkörper (74) mit veränderbarer Einstellung (76) auf dem Kabel (10) festgelegt ist und auf die Hülse (42) entgegen dem elastischen Mittel (64) einwirkt, wenn sich die mechanische Steuerung in ihrer Ruhestellung befindet, um die Kugel (60) zu lösen und die freie Positionierung des Endabschnittes (36, 48) des Mantels bezüglich des ortsfesten Trägers zu ermöglichen.

2. Mechanische Steuerung nach Anspruch 1, dadurch gekennzeichnet, daß die Hülse (42) einen Vorsprung (70) aufweist, der in Anlage mit dem ortsfesten Träger (13, 38) gelangt, um seine Bewegung entgegen dem elastischen Mittel (64) unter der Wirkung des Anschlagkörpers (74) zu begrenzen.

3. Mechanische Steuerung nach Anspruch 1 oder 2, dadurch gekennzeichnet, daß das elastische Mittel (64) von einer zylindrischen, zum Endabschnitt (36, 48) des Mantels koaxialen Feder gebildet wird, die sich an einer Schulter (66) des ortsfesten Trägers (38) abstützt.

4. Mechanische Steuerung nach einem der Ansprüche 1 bis 3, dadurch gekennzeichnet, daß der besagte Endabschnitt des Mantels eine starre, rohrförmige Verlängerung (48) aufweist, die am Ende (36) des Mantels befestigt ist.

5. Mechanische Steuerung nach Anspruch 4, dadurch gekennzeichnet, daß sie ein zusätzliches elastisches Mittel (78) aufweist, das zwischen dem ortsfesten Träger (38) und der rohrförmigen Verlängerung (48) des Mantels so angeordnet ist, daß es den Mantel (12) gegen die Verankerung ihres Endes (34) axial und permanent zusammendrückt.

6. Mechanische Steuerung nach einem der vorhergehenden Ansprüche, dadurch gekennzeichnet, daß sie entfernbare Mittel (80) aufweist, die die Anfangseinstellung der relativen Lagen der Komponenten (38, 42, 48) der Steuerung erlauben, wenn sich die letztere in ihrer Ruhestellung befindet.

7. Mechanische Steuerung nach Anspruch 6, dadurch gekennzeichnet, daß die entfernbaren Mittel von einem entfernbaren Element (82) gebildet werden, das dazu dient, den Endabschnitt (48) des Mantels (11) und die Hülse (42) bezüglich des ortsfesten Trägers (38) axial festzulegen.

FIG_1

0 030 494

FIG_2

FIG_3

FIG_4

0 030 494

FIG_5

0 030 494